# NEUE EUROPÄISCHE PATENTSCHRIFT

(11) **EP 2 385 885 B2**
(45) Veröffentlichungstag und Bekanntmachung des Hinweises auf die Entscheidung über den Einspruch: **23.08.2017**
(45) Hinweis auf die Patenterteilung: 26.02.2014
(21) Anmeldenummer: 09799652.4
(22) Anmeldetag: 30.12.2009
(51) Int. Cl.: B23F 5/16, B23F 17/00, B23F 19/00, B23F 19/10

(54) **VORRICHTUNG UND VERFAHREN ZUM VERZAHNEN VON WERKSTÜCKEN**
DEVICE AND METHOD FOR CUTTING TEETH IN WORKPIECES
DISPOSITIF ET PROCÉDÉ POUR TAILLER DES DENTS DANS DES PIÈCES

(30) Priorität: 12.01.2009 DE 102009003338
(43) Veröffentlichungstag der Anmeldung: 16.11.2011
(73) Patentinhaber: Profilator GmbH & Co. KG, 42329 Wuppertal (DE)
(72) Erfinder: PROCK, Erich, 88213 Ravensburg (DE); SOBCZYK, Marcel, 42653 Solingen (DE)
(74) Vertreter: Grundmann, Dirk
(86) Internationale Anmeldenummer: PCT/EP2009/068026
(87) Internationale Veröffentlichungsnummer: WO 2010/079113

(56) Entgegenhaltungen:
- WO-A1-2007/045610
- DE-A1- 10 211 129
- DE-A1- 10 249 039
- DE-A1- 10 309 116
- DE-A1- 19 918 289
- DE-A1-102005 049 528
- DE-A1-102007 015 357
- DE-U1- 29 815 125
- DIN 3972 Bezugsprofile von Verzahnwerkzeugen (Ausgabe Februar 1952)
- BAUSCH T. ET AL: 'Innovatibe Zahnradfertigung', Bd. 3. AUFL., 2006, EXPERT VERLAG, RENNINGEN Seiten 307 - 311

## Beschreibung

Die Erfindung betrifft ein Verfahren zum Verzahnen von Werkstücken, wobei in einem Schruppgang ein im Wesentlichen unverzahnter Rohling mit einem Schneidzähne aufweisenden ersten Schneidwerkzeug eine Grobverzahnung erhält, bei dem Zähne erzeugt werden, deren durch den Abstand ihrer Zahnflanken definierte Zahnbreite größer ist als das Sollmaß, wobei in einem sich daran anschließenden Entgratgang einhergehend mit der Entfernung eines Stirnseitengrates in die Stirnrandkante der Zahnflanken eine Fase eingearbeitet wird und wobei schließlich in einem Schlichtgang durch Bearbeiten der Zahnflanken die Zahnbreite der Zähne auf das Sollmaß gebracht wird.

Die Erfindung betrifft auch eine Vorrichtung zur Durchführung des Verfahrens und einen dazu geeigneten Werkzeugsatz.

Bei einem Verzahnen von im Wesentlichen zylinderförmigen Rohlingen, wie es bspw. die DE 102 49 039 B4 beschreibt, wird ein Rohling zunächst mit einem Verzahnwerkzeug, welches Schneidzähne aufweist, verzahnt. Die Verzahnung kann durch Wälzfräsen und bevorzugt durch Wälzschälen erfolgen. Ein Wälzschälverfahren zum Verzahnen von innen- oder außenverzahnten Werkstücken beschreibt die DE 10 2005 049 528 A1. Beim gattungsgemäßen Verfahren wird zunächst mit dem Schneidwerkzeug eine Grobverzahnung gefertigt. Dies erfolgt in einem Schruppgang. Im Anschluss an diesen ersten Verfahrensschritt werden die Zahnflanken insbesondere im Bereich ihrer stirnseitigen Kanten entgratet. Das Entgraten kann mit einem Verfahren erfolgen, wie es die oben genannte DE 102 49 039 B4 oder aber auch die DE 103 09116 A1 beschreibt. Das letztgenannte Dokument beschreibt ein Verfahren nach dem Oberbegriff von Anspruch 1 und eine Vorrichtung nach dem Oberbegriff von Anspruch 5. Dabei wird in dem Kantenbereich zwischen Zahnflanke und Stirnseite des Werkstücks eine Fase eingedrückt. Das dabei verdrängte Material wird zum großen Teil in die Stirnfläche geschoben, wo es mit einem Entgratrad entfernt wird. Im Flankenbereich kann ein Sekundärgrat verbleiben. Dieser Sekundärgrat wird in einem dritten Verfahrensschritt, einem sog. Schlichtgang entfernt. Schruppgang und Schlichtgang werden mit denselben Schneidwerkzeugen durchgeführt, deren Form so gestaltet ist, dass mit ihnen die Zahnlücken bzw. die Zähne des Werkstücks auf Sollmaß gefertigt werden können.

Der Erfindung liegt die Aufgabe zugrunde, das eingangs genannte Verfahren hinsichtlich seiner Leistungsfähigkeit weiterzubilden und hierzu eine geeignete Vorrichtung sowie einen geeigneten Werkzeugsatz anzugeben.

Gelöst wird die Aufgabe durch die in den Ansprüchen angegebene Erfindung, wobei die Unteransprüche vorteilhafte Weiterbildungen der zugehörigen nebengeordneten Ansprüche sind.

Zunächst und im Wesentlichen ist vorgesehen, dass bei dem Verfahren verschiedene Werkzeuge verwendet werden. Für den Schruppgang wird ein insbesondere zahnradförmiges Schneidwerkzeug verwendet, welches in Form von Schruppzähnen Schneidzähne ausbildet. Für den Schlichtgang wird ein bevorzugt ebenfalls zahnradförmiges Schlichtwerkzeug verwendet, welches von den Schruppzähnen verschieden gestaltete Schlichtzähne aufweist. Die Schruppzähne des Schruppwerkzeuges besitzen eine Zahnhöhe, die eine Zahnlücke fertigt, die eine Zahnlückenhöhe aufweist, die im Wesentlichen dem Sollmaß entspricht. Mit dem Kopf des Schruppzahnes wird somit bereits im Schruppgang der Zahnfuß des zu fertigenden Zahnes gefertigt. Die dem Schlichtwerkzeug zugeordneten Schlichtzähne haben eine geringere Zahnhöhe. Die vom Schruppwerkzeug gebildeten Schruppzähne sind schmaler gestaltet als die vom Schlichtwerkzeug gebildeten Schlichtzähne. Letztere haben eine derartige Gestalt, dass mit ihnen die Weite der Zahnlücken auf Sollmaß gebracht werden kann. Mit den Schruppzähnen des Schruppwerkzeuges werden im Werkstück Zähne gefertigt, die zwar die Sollhöhe aber ein Flankenaufmaß hinsichtlich ihrer Breite besitzen. In einer Weiterbildung des Verfahrens werden mit einem Drückzähne aufweisenden Rolldrückwerkzeug Fasen in den Kantenbereich der Zahnflanken eingedrückt, die im Fußbereich des zu fertigenden Zahnes eine geringere Breite aufweisen als im Kopfbereich des zu fertigenden Zahnes. Diese verbreiterte Fase erstreckt sich kommaförmig vom Kopf des zu fertigenden Zahnes bis über einen mittleren Abschnitt hinaus. Im Schlichtgang wird der kommaförmig verbreiterte Abschnitt der Fase durch Materialabtrag an den Zahnflanken wieder verschmälert, so dass nach dem Schlichtgang die kommaförmige Fase hin zu einer Parallelfase reduziert ist. Mit dem Schlichtwerkzeug wird bevorzugt nur derjenige Bereich der Flanke des zu fertigenden Zahnes bearbeitet, der beim bestimmungsgemäßen Gebrauch des fertigen Werkstücks an einer kraftübertragenden Abrollbewegung an den Zahnflanken eines anderen Zahnes teilnimmt. Während beim Schruppgang mit einem hohen Vorschub und einer hohen Spantiefe, also mit einer hohen Zerspanungsleistung gearbeitet wird, wird beim Schlichtgang mit einem geringen Vorschub und einer verminderten Spantiefe gearbeitet, also mit einer geringen Zerspanleistung. Während das Schruppwerkzeug die Zahnlücke bis auf volle Tiefe bearbeitet, wobei ein Schlichtaufmaß auf der Zahnflanke verbleibt, ist das Schlichtwerkzeug im Zahnkopfbereich zurückgenommen, so dass der Zahnfuß im Schlichtgang nicht mehr bearbeitet wird.

Die Vorrichtung zur Durchführung des Verfahrens besitzt einen Maschinengrundkörper, auf dem eine Werkstückspindel linear verlagerbar angeordnet ist. Die Verlagerungsrichtung der Werkstückspindel verläuft im Wesentlichen quer zur Spindelerstreckung der Werkstückspindel. Die Werkstückspindel ist bevorzugt von einem Elektromotor drehantreibbar. Das Maschinenbett trägt in einer ersten Variante insgesamt drei Werkzeugspindeln. In einer zweiten Variante sind nur zwei Werkzeugspindeln vorgesehen. Bei der ersten Variante wird das Schruppwerkzeug und das Schlichtwerkzeug jeweils von einer individuell diesem Werkzeug zugeordneten Werkzeugspindel aufgenommen. Bei der zweiten Variante sitzen Schruppwerkzeug und Schlichtwerkzeug auf einer gemeinsamen Werkzeugspindel. Zur Vermeidung möglicher Kollisionen ist das vordere, der axial hintereinander liegenden Werkzeuge durchmessergeringer als das dahinter liegende Werkzeug. Die beiden Werkzeuge unterscheiden sich im Wesentlichen durch die Zähnezahl. Das vordere Werkzeug kann das Schlichtwerkzeug oder das Schruppwerkzeug sein. Die Werkzeugspindeln können parallel zueinander angeordnet sein, wobei sich ihre Achsen im Wesentlichen quer zur Verlagerungsrichtung der Werkstückspindel erstrecken. Je nach Art der Verzahnung stehen die Spindelachsen aber in einem Achskreuzwinkel zueinander. Die Werkzeugspindeln sind im Wesentlichen ortsfest dem Maschinengrundkörper zugeordnet Sie können jedoch zur Einstellung des Achskreuzwinkels gegenüber der Zustellbewegungsrichtung der Werkstückspindel verdreht werden. Des Weiteren kann vorgesehen sein, dass die Werkzeugspindeln eine Vorschubbewegung durchführen können. Es ist aber auch möglich, dass die Werkstückspindel die Vorschubbewegung durchführt. Die erste Werkzeugspindel trägt das Schruppwerkzeug. Die zweite Werkzeugspindel das Rolldrückwerkzeug. Die dritte Werkzeugspindel trägt das Schlichtwerkzeug. Die dem Rolldrückwerkzeug zugeordnete Werkzeugspindel kann darüber hinaus mit einem Schneidrad kombiniert sein. Die das Rolldrückwerkzeug tragende Werkzeugspindel braucht nicht drehangetrieben zu sein. Durch den Zahneingriff des Rolldrückwerkzeuges in die Verzahnung des grobverzahnten Werkstücks kann das Rolldrückwerkzeug drehmitgeschleppt werden. Sofern sowohl Werkstückspindel als auch Werkzeugspindel jeweils von einem Motor drehangetrieben werden, sind die Motoren über eine elektronische Steuerung synchronisiert, so dass sie in einem festen Drehzahlverhältnis zueinander laufen.

Der Werkzeugsatz zur Durchführung des Verfahrens besteht im Wesentlichen aus einem zahnradförmigen Schruppwerkzeug, einem zahnradförmigen Rolldrückwerkzeug und einem zahnradförmigen Schlichtwerkzeug. Dabei können die Schneidzähne vom Schruppwerkzeug bzw. Schlichtwerkzeug auf einer Wendelgangkurve liegen oder schräg verlaufen oder aber auch gerade verlaufen. Die Zähne des Schruppwerkzeuges sind länger als die Zähne des Schlichtwerkzeuges. Die Zähne des Schlichtwerkzeuges sind schmaler als die Zähne des Schruppwerkzeuges. Die Zähne des Rolldrückwerkzeuges haben schräge, sich gegenüberliegende Druckflanken, die in der Lage sind, in die vom Schruppwerkzeug gefertigten Zahnflanken kommaförmige Fasen einzudrücken, wobei die Breite der Fasen im Bereich des Kopfes des zu fertigenden Zahnes und im Bereich des mittleren Flankenabschnittes des zu fertigenden Zahnes breiter ist als die im Fußbereich des zu fertigenden Zahnes gefertigte Fase.

Ausführungsbeispiele der Erfindung werden nachfolgend anhand beigefügter Zeichnungen erläutert. Es zeigen:
- Fig. 1: in Draufsicht auf die Stirnseite, also mit senkrecht zur Zeichenebene sich erstreckender Drehachse, einen Abschnitt eines zu verzahnenden Werkstücks 1, bei dem ein Schruppzahn 3 eines Schruppwerkzeuges 2 sich im Eingriff befindet,

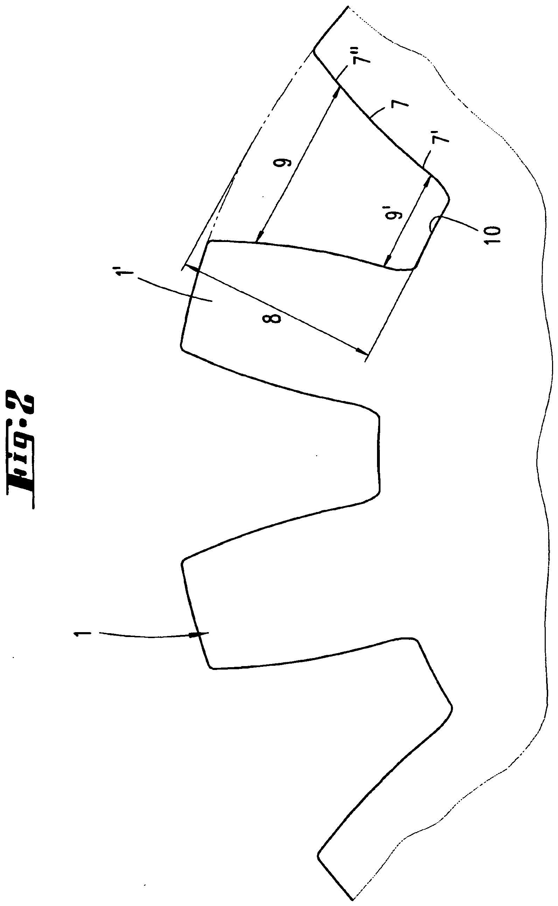

- Fig. 2: eine Darstellung gemäß Fig. 1 nach einem Schruppgang,
- Fig. 3: eine Darstellung gemäß Fig. 2 nach einem auf den Schruppgang folgenden Entgratgang mit in den Zahnflanken im Kantenbereich zur Stirnseite herausgedrückten Fasen 11,
- Fig. 4: einen Schnitt durch eine Zahnlücke zwischen zwei Werkstückzähnen 1' mit im Eingriff befindlichen Rolldrückzahn 31 eines Rolldrückwerkzeuges 26 zur Erzeugung der Fasen 11,
- Fig. 5: eine Darstellung gemäß Fig. 1 mit im Eingriff befindlichen Schlichtzahn 13 eines Schlichtwerkzeuges 12,
- Fig. 6: eine Darstellung gemäß Fig. 3 des fertigen Werkstücks,

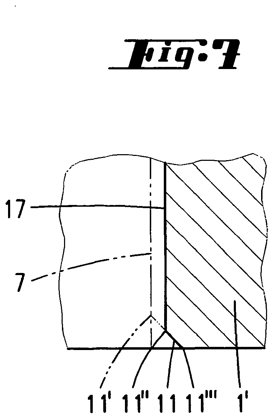

- Fig. 7: einen Schnitt gemäß der Linie VII - VII in Fig. 5,
- Fig. 8: eine schematische Draufsicht auf eine Werkzeugmaschine,
- Fig. 9: eine schematische Darstellung auf eine Werkzeugmaschine eines weiteren Ausführungsbeispiels.

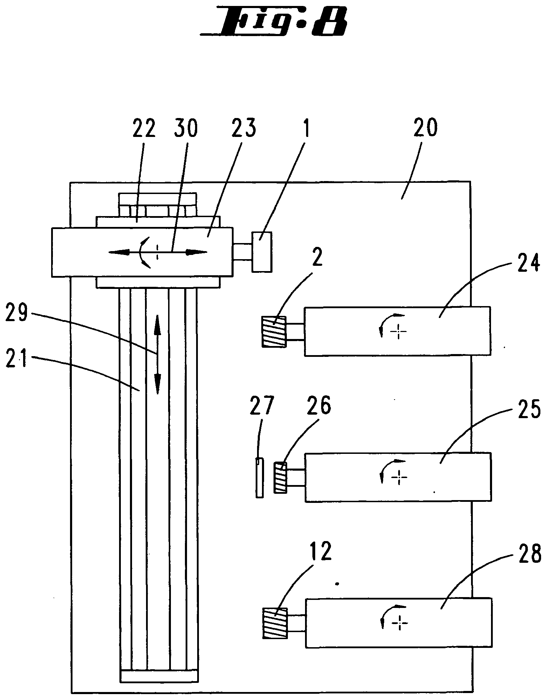

Die Fig. 8 zeigt grob schematisch den Aufbau einer Werkzeugmaschine. Ein Grundgestell 20 trägt eine Linearführung 21, auf der ein Schlitten 22 in Richtung des Doppelpfeiles 29 verlagerbar ist. Der Schlitten 22 trägt eine von einem Elektromotor angetriebene Werkstückspindel 23, die in ihrer Werkstückaufnahme ein zylinderförmiges Werkstück 1 trägt, welches auf der Werkzeugmaschine mit einer Verzahnung versehen werden soll. Die Werkstückspindel 23 kann in ihrer Achsrichtung entlang des Doppelpfeiles 30 zum Zwecke des Vorschubs verlagert werden. Es ist ferner angedeutet, dass die Werkstückspindel 23 auch bezogen auf die Zustellrichtung 29 in eine Drehstellung gebracht werden kann.

Eine erste Werkzeugspindel 24 ist ortsfest am Maschinenbett 20 befestigt. Diese Werkzeugspindel 24 trägt ein Schruppwerkzeug 2 und kann in eine Verdrehtstellung gebracht werden bzw. zum Zwecke des Vorschubs in ihre Achsrichtung verlagert werden.

Eine zweite Werkzeugspindel 25 ist ebenfalls ortsfest am Maschinengestell 20 befestigt. Die zweite Werkzeugspindel 25 kann ebenfalls in eine Drehstellung gebracht werden bzw. zum Zwecke des Vorschubs in ihre Achsrichtung verlagert werden. Die zweite Werkzeugspindel 25 trägt ein Rolldrückwerkzeug 26, welches mit einem Schneidrad 27 kombiniert ist. Ein Rolldrückwerkzeug 26 wird in der DE 103 09116 A1 im Detail beschrieben, weshalb hierzu auf die dortigen Ausführungen Bezug genommen wird. Diese Druckschrift beschreibt auch das mit dem Rolldrückwerkzeug zusammenwirkende Schneidrad.

Eine dritte Werkzeugspindel 28 ist ebenfalls ortsfest am Maschinenbett 20 befestigt, ist verdrehbar und zum Zwecke des Vorschubs in Richtung ihrer Achse verlagerbar. Diese Werkzeugspindel 28 trägt ein Schlichtwerkzeug 12.

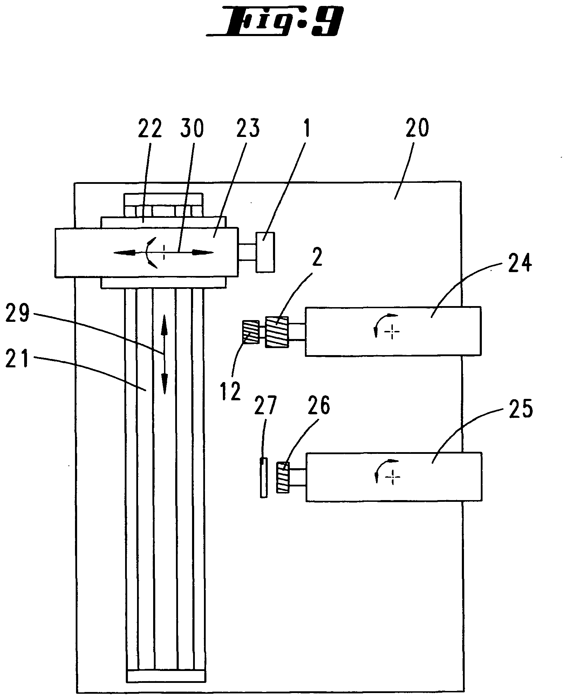

Bei dem in der Fig. 9 dargestellten Ausführungsbeispiel sind lediglich zwei Werkzeugspindeln 24, 25 vorgesehen. Die Werkzeugspindel 24 trägt sowohl das Schruppwerkzeug 2 als auch das Schlichtwerkzeug 12. Beide Werkzeuge 2, 12 werden von einer gemeinsamen Werkzeugspindel 24 drehangetrieben. Um mögliche Kollisionen zu vermeiden, besitzt das vordere Werkzeug einen geringeren Durchmesser als das rückwärtige Werkzeug. Die beiden Werkzeuge unterscheiden sich durch die Zähnezahl. Die Abstände und die Größenverhältnisse der Werkzeuge 2, 12 werden so angepasst, dass es zu keinen Kollisionen mit dem Werkstück 1 kommt. Das vordere Werkzeug kann das Schlichtwerkzeug 12 oder das Schruppwerkzeug 2 sein. In der Fig. 9 ist das vordere Werkzeug das Schlichtwerkzeug.

Das Schlichtwerkzeug 12 und das Schruppwerkzeug 2 haben beim Ausführungsbeispiel die Form eines Zahnrades. In Betracht kommt die Form solcher Werkzeuge, wie sie die DE 10 2005 049 528 A1 beschreibt.

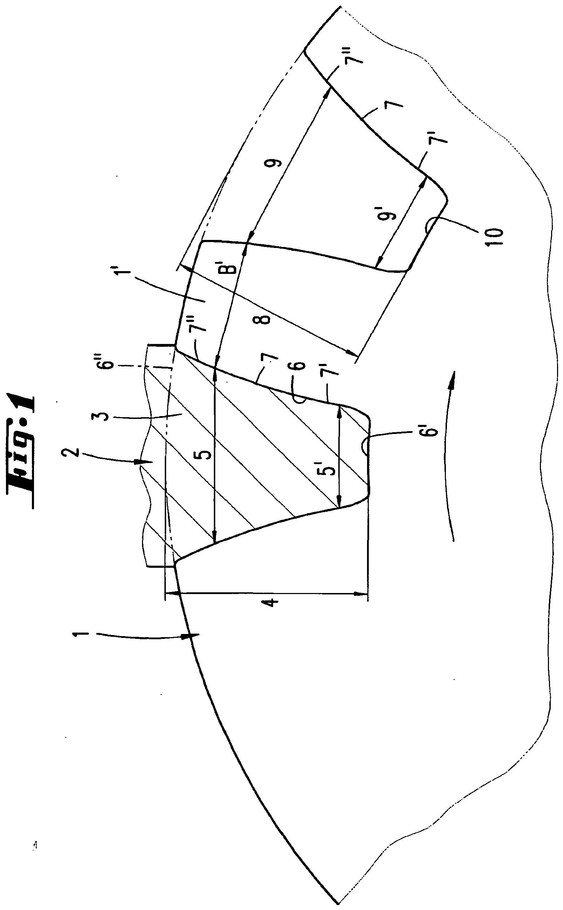

Zum Verzahnen des Rohlings 1 wird dieser zunächst vom Futter der Werkstückspindel 23 aufgenommen. Anschließend fährt die Werkstückspindel 23 durch Verlagerung des Schlittens 22 entlang des Doppelpfeiles 29 in eine Bearbeitungsposition zum Schruppwerkzeug 2. Die Zähne des Schruppwerkzeuges 2 besitzen jeweils Zahnflanken 6, die in einen Zahnkopf 6' übergehen und eine gedachte Zahnfußlinie 6", die sich bei der in Fig. 1 dargestellten Eingriffsstellung des Schruppzahnes 3 im Werkstück 1 entlang der Umfangslinie des Werkstücks 1 erstreckt. Von dieser Schruppzahnfußlinie 6" ist der Schruppzahnkopf 6' um die Schruppzahnhöhe 4 beabstandet.

Bei der in Fig. 1 dargestellten Schrupp-Bearbeitung werden Zähne 1' einer Breite B' erzeugt. Die Zahnlückenweiten 9, 9' der von den Schruppzähnen 3 gefertigten Zahnlücken entsprechen dabei den Schruppzahnbreiten 5, 5' der Schruppzähne 3 im Kopfbereich 9 bzw. im Fußbereich 9'. Die Zahnlückentiefe 8, also der Abstand des Zahnlückenbodens 10 zur gedachten Umfangslinie des Werkstücks 1 entspricht dabei im Wesentlichen der Schruppzahnhöhe 4.

Die Schruppzahnbreiten 5, 5' und die Schruppzahnhöhe 4 ist so ausgelegt, dass im Schruppgang Zahnlücken zwischen den Zähnen 1' gefertigt werden, deren Tiefe 8 dem Sollmaß entspricht. Die Zahnlückenbreite 9' im Fußbereich des Zahnes 1', welche der dortigen Schruppzahnbreite 5' entspricht, entspricht im Wesentlichen dem Sollmaß der zu fertigenden Zahnlücke. Die Zahnlückenweite 9 im Kopfbereich des zu fertigenden Zahnes 1' ist dagegen geringer als das Sollmaß 9". Demzufolge werden mit dem Schruppwerkzeug 2 bzw. den Schruppzähnen 3 Zähne 1' gefertigt, deren Breite B' größer ist als das Sollmaß B.

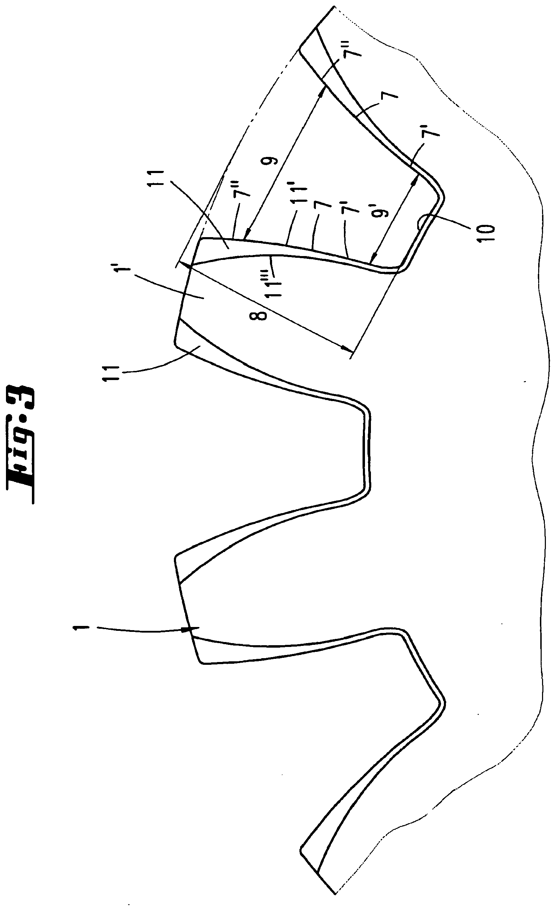

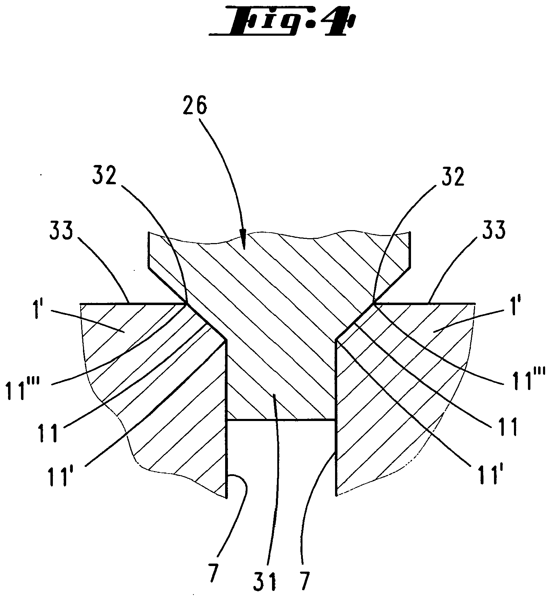

In dem in den Figuren 3 und 4 dargestellten zweiten Verfahrensschritt werden die Randkanten der Zahnflanken 7 zur Stirnseite 33 des Werkstücks 1 bearbeitet. Mit dem Rolldrückwerkzeug 26 und dessen Rolldrückzähnen 31 werden im Bereich dieser Kanten Fasen 11 in das Material des Werkstücks 1 eingedrückt. Hierzu besitzt der Rolldrückzahn 31 schräg verlaufende, sich gegenüber liegende Drückflanken 32. Die dabei auf der Stirnseite 33 entstehenden Sekundärgrate werden von einem oder mehreren Schneidrädern 27 entfernt. Das hier verwendete Werkzeug kann grundsätzlich eine Ausgestaltung besitzen, wie sie die DE 102 49 039 B4 beschreibt. Es können somit auch zwei Rolldrückwerkzeuge und zwei Schneidräder vorgesehen sein. Hinsichtlich des Rolldrückverfahrens wird deshalb auf die DE 102 49 039 B4 verwiesen.

Das erfindungsgemäße Rolldrückwerkzeug 26 besitzt Rolldrückzähne 31 mit Drückflanken 32, die so gestaltet sind, dass in die im Schruppgang gefertigten Zahnflanken 7 kommaförmige Fasen 11 eingedrückt werden. Die Übergangskante 11', mit der die Fase 11 in die Zahnlückenflanke 7 übergeht und die Fasenkante 11"', mit der die Fase 11 in die Stirnseite 33 übergeht, divergieren vom Fuß zum Kopf des Zahnes 1' hin. Die Fase 11 ist somit im Kopfbereich 7" der Flanke 7 breiter als im Fußbereich 7' der Flanke 7.

Bei einer Variante der Erfindung ist vorgesehen, dass das erfindungsgemäße Rolldrückwerkzeug 26 derartige Rolldrückzähne 31 mit Druckflanken 32 besitzt, die so gestaltet sind, dass in die im Schruppgang gefertigten Zahnflanken 7 Fasen 11 mit parallel zueinander verlaufenden Randkanten eingedrückt werden.

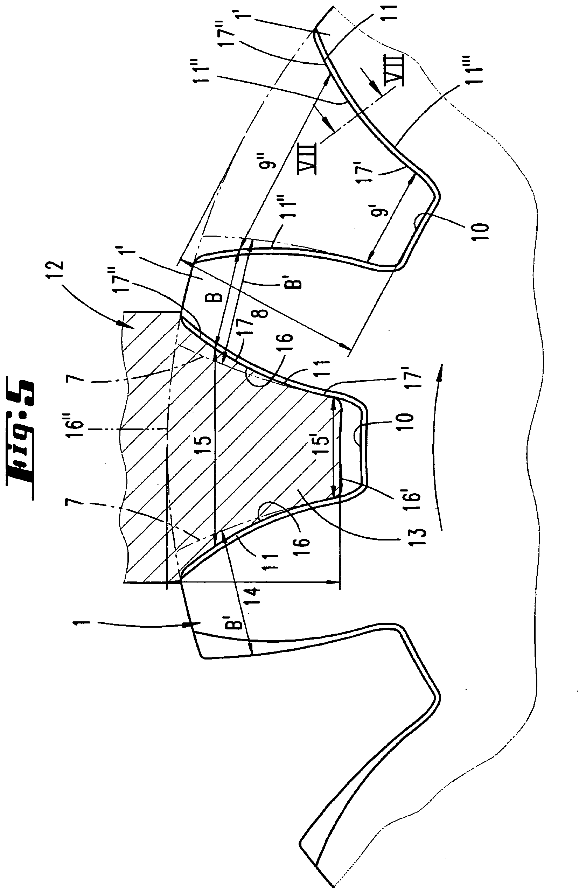

Bei dem in der Fig. 5 dargestellten dritten Verfahrensschritt, wird das gemäß Fig. 3 mit einer Fase 11 ausgestatte Werkstück 1 feinbearbeitet. Während der erste Verfahrensschritt, also der Schruppgang, mit einem hohen Vorschub und mit einer hohen Spantiefe, also mit einer großen Zerspanleistung erfolgt, wird der Schlichtgang mit einer geringeren Zerspanleistung durchgeführt.

Bei dem Schlichtwerkzeug 12 handelt es sich ebenfalls um ein zahnradförmiges Werkzeug, wie es bspw. die DE 10 2005 049 528 A1 beschreibt. Es hat im Groben dieselbe Form, wie das Schruppwerkzeug 2. Es besitzt aber anders gestaltete Schlichtzähne 13. Die von der Fußlinie 16" gemessene Schlichtzahnhöhe 14 bis zum Kopf 16' des Schlichtzahnes 13 ist geringer als die Schruppzahnhöhe 4. Die Schlichtzahnhöhe 14 ist somit auch geringer als die Zahnlückentiefe 8. Demzufolge besitzt die Fläche des Kopfes 16' des in die Zahnlücke eingreifenden Schlichtzahnes 13 einen Abstand zum Zahnlückenboden 10, welcher vom Schruppzahn 3 erzeugt worden ist. Die kopfseitige Breite 15' des Schlichtzahnes 13 entspricht im Wesentlichen der dortigen Breite 5' des Schruppzahnes und damit in etwa dem Sollmaß 9' der Zahnlückenweite. Die fußseitige Breite 15 des Schlichtzahnes 13 ist allerdings größer als die fußseitige Breite 5 des Schruppzahnes 3, so dass im Kopfbereich 7" der Zahnlückenflanke 7 und in einem darüber hinaus bis hin zum Zahnfußbereich 7' sich erstreckenden Flankenabschnitt beim Schlichten ein Materialabtrag erfolgt. Bei diesem Materialabtrag wird der dort die Breite B' aufweisende Zahn 1' breitenvermindert bis auf das Sollmaß B. Das beim Schruppgang belassene Aufmaß der Zahnbreite B' wird somit im Schlichtgang zumindest in dem Bereich, in dem die gefertigten Zähne an Zähnen anderer Zahnräder bei ihrer bestimmungsgemäßen Verwendung abrollen, auf das Sollmaß B reduziert. Die dabei erzeugte Flanke 17 ändert sich im Zahnfußbereich 17' kaum, jedoch im Kopfbereich 17" stark. Der Verlauf der im Schlichtgang gefertigten Flanke 17 belässt eine Übergangskante 11" zur Fase 11, die im Wesentlichen parallel verläuft zur Übergangskante 11"' zur Stirnseite 33.

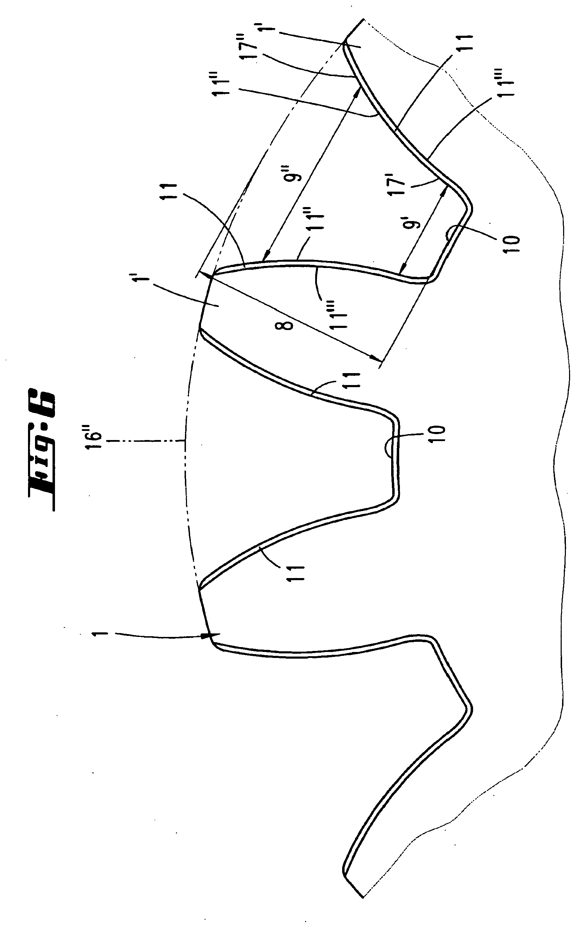

Der Fig. 6 ist zu entnehmen, dass die Ränder 11', 11" der Fase 11 parallel zueinander verlaufen.

Das mit der in Fig. 9 dargestellten Werkzeugmaschine durchgeführte Verfahren unterscheidet sich von dem mit der in Fig. 8 dargestellten Werkzeugmaschine durchgeführte Verfahren lediglich dadurch, dass das Werkstück 1 nach dem Entgraten wieder zurück zur Werkstückspindel 24 verfahren wird, um an dieser Position die Schlichtbearbeitung durchzuführen.

Das erfindungsgemäße Verfahren bringt eine Standzeiterhöhung der verwendeten Werkzeuge.

## Patentansprüche

1. Verfahren zum Verzahnen von Werkstücken (1), wobei in einem Schruppgang ein im Wesentlichen unverzahnter Rohling mit einem Schneidzähne (3) aufweisenden ersten Schneidwerkzeug (2) eine Grobverzahnung erhält, bei dem Zähne (1') erzeugt werden, deren durch den Abstand ihrer Zahnflanken (7, 7', 7") definierte Zahnbreite (B') größer ist als das Sollmaß (B), wobei in einem sich daran anschließenden Entgratgang einhergehend mit der Entfernung eines Stirnseitengrates in die Stirnrandkante der Zahnflanken mit einem mit einem Entgratrad kombinierten Rolldrückwerkzeug (26) eine Fase (11) eingearbeitet wird und wobei schließlich in einem Schlichtgang durch Bearbeiten der Zahnflanken (7, 7', 7") die Zahnbreite der Zähne (1') auf das Sollmaß (B) gebracht wird, **dadurch gekennzeichnet, dass** im Schruppgang ein Schruppwerkzeug mit Schruppzähnen (3) verwendet wird, die eine Schruppzahnhöhe (4) aufweisen, die im Wesentlichen dem Sollmaß der Zahnlückentiefe (8) entspricht, und dass im Schlichtgang ein Schlichtwerkzeug (12) mit Schlichtzähnen (13) verwendet wird, wobei die Schlichtzahnhöhe (14) geringer ist als die Schruppzahnhöhe (4) und die Schlichtzahnbreite (15) größer ist als die Schruppzahnbreite (5).

2. Verfahren nach Anspruch 1, **dadurch gekennzeichnet, dass** das Schruppwerkzeug (2) und Schlichtwerkzeug (12) von einer gemeinsamen Werkzeugspindel (24) oder von verschiedenen Werkzeugspindeln (24, 28) drehangetriebene, eine Vielzahl von Schneidzähnen (3,13) ausbildende, zahnradförmige Werkzeuge sind.

3. Verfahren nach einem der vorhergehenden Ansprüche, **dadurch gekennzeichnet, dass** die im Entgratgang gefertigte Fase (11) im Kopfbereich (7") der Zahnflanken (7) breiter ist als im Fußbereich (7') der Zahnflanken (7).

4. Verfahren nach einem der vorhergehenden Ansprüche, **dadurch gekennzeichnet, dass** die im Entgratgang gefertigte Fase (11) im Kopfbereich (7") der Zahnflanke (7) und in einem sich daran anschließenden mittleren Bereich der Zahnflanke (7) im Schlichtgang breitenvermindert wird.

5. Vorrichtung zur Durchführung des Verfahrens nach einem der vorhergehenden Ansprüche mit einem Maschinengrundkörper (20), einer im Wesentlichen ortsfest dem Maschinengrundkörper (20) zugeordneten ersten Werkzeugspindel (24) mit einem Schruppwerkzeug (2), einer im Wesentlichen ortsfest dem Maschinengrundkörper (20) zugeordneten zweiten Werkzeugspindel (25) mit einem mit einem Entgratrad (27) kombinierten Rolldrückwerkzeug (26), einem Schlichtwerkzeug (12), welches entweder von einer im Wesentlichen ortsfest dem Maschinengrundkörper (20) zugeordneten dritten Werkzeugspindel (28) oder von der ersten Werkzeugspindel (24) aufgenommen wird, und mit einer zu den zwei bzw. drei Werkzeugspindeln zustellbaren Werkstückspindel (23) zur Aufnahme eines Werkstücks (1), **dadurch gekennzeichnet, dass** die Zahnhöhe (4) der Schruppzähne (3) des Schruppwerkzeuges (2) im Wesentlichen dem Sollmaß der Zahnlückentiefen (8) einer zu fertigenden Verzahnung entspricht, jedoch schmaler ist als die Sollbreite (B) der zu fertigenden Zahnlücke und wobei die Drückzähne (31) des Rolldrückwerkzeuges (26) zumindest eine schräge Drückflanke (32) aufweisen, die im Kopfbereich (7") der Zahnflanke (7) eine breitere Fase (11) erzeugen als im Fußbereich (7') der Zahnflanke (7) und wobei die Schlichtzähne (13) des Schlichtwerkzeuges (12) eine Zahnhöhe (14) aufweisen, die geringer ist als die Zahnhöhe (4) der Schruppzähne, und eine Zahnbreite (15) aufweisen, die größer ist als die Zahnbreite (5) der Schruppzähne (3).

6. Vorrichtung nach Anspruch 5, **dadurch gekennzeichnet, dass** die Werkstückspindel (23) und / oder die Werkzeugspindeln (24, 25, 28) in der Lage sind, eine quer zur Zustellrichtung (29) gerichtete Vorschubbewegung (30) durchzuführen.

7. Vorrichtung nach einem der Ansprüche 5 oder 6, **dadurch gekennzeichnet, dass** zumindest die erste oder die dritte Werkzeugspindel (24, 28) und die Werkstückspindel (23) von einem Motor drehantreibbar sind, wobei die Werkstückspindel (23) und die mindestens eine drehangetriebene Werkzeugspindel (24, 28) von einer elektronischen Steuereinrichtung im Gleichlauf gehalten sind.

8. Vorrichtung nach einem der Ansprüche 5 bis 7, **dadurch gekennzeichnet, dass** die Werkzeugspindeln (24,25,28) parallel zueinander angeordnet sind, wobei ihre Achsen im Wesentlichen quer zur Zustellrichtung (29) verlaufen.

## Claims

1. Method for cutting teeth in workpieces (1), wherein, in a roughing operation, a substantially uncut blank receives rough teeth using a first cutting tool (2) having cutting teeth (3), in which operation teeth (1') are produced, the tooth width (B') of which is defined by the spacing between the flanks (7, 7', 7") of the teeth and is greater than the target dimension (B), wherein, in a subsequent deburring operation with a roller compression tool (26) that is combined with a deburring wheel, a chamfer (11) is incorporated into the end face edge of the tooth flanks, accompanied by the removal of an end face burr, and wherein lastly, in a smoothing operation, the tooth width of the teeth (1') is brought to the target dimension (B) by machining the tooth flanks (7, 7', 7"), **characterized in that** a roughing tool having roughing teeth (3) is used in the roughing operation, the roughing teeth having a roughing tooth height (4) that substantially corresponds to the target dimension of the tooth gap depth (8), and that a smoothing tool (12) having smoothing teeth (13) is used in the smoothing operation, the smoothing tooth height (14) being less than the roughing tooth height (4), and the smoothing tooth width (15) being greater than the roughing tooth width (5).

2. Method according to Claim 1, **characterized in that** the roughing tool (2) and the smoothing tool (12) are gear wheel-shaped tools which are rotationally driven by a shared tool spindle (24) or by different tool spindles (24, 28) and which provide a multiplicity of cutting teeth (3, 13).

3. Method according to one of the preceding claims, **characterized in that** the chamfer (11) produced in the deburring operation is wider in the head region (7") of the tooth flanks (7) than in the base region (7') of the tooth flanks (7).

4. Method according to one of the preceding claims, **characterized in that** in the smoothing operation, the chamfer (11) produced in the deburring operation has a decreased width in the head region (7") of the tooth flank (7) and in a middle region of the tooth flank (7) adjacent the head region.

5. Apparatus for currying out the method according to one of the preceding claims, having a machine base body (20), a first tool spindle (24) that is substantially fixedly associated with the machine base body (20) and has a roughing tool (2), a second tool spindle (25) that is substantially fixedly associated with the machine base body (20) and has a roller compression tool (26) that is combined with a deburring wheel (27), a smoothing tool (12) which is accommodated either by a third tool spindle (28) that is substantially fixedly associated with the machine base body (20) or by the first tool spindle (24), and having a workpiece spindle (23), to which two or three tool spindles may be fitted, for accommodating a workpiece (1), **characterized in that** the tooth height (4) of the roughing teeth (3) of the roughing tool (2) substantially corresponding to the target dimension of the tooth gap depths (8) of gear teeth to be produced, but being narrower than the target width (B) of the tooth gap to be produced, and the compression teeth (31) of the roller compression tool (26) having at least one inclined compression flank (32) which produces a chamfer (11) that is wider in the head region (7") of the tooth flank (7) than in the base region (7') of the tooth flank (7), and the smoothing teeth (13) of the smoothing tool (12) having a tooth height (14) that is less than the tooth height (4) of the roughing teeth, and having a tooth width (15) that is greater than the tooth width (5) of the roughing teeth (3).

6. Apparatus according to Claim 5, **characterized in that** the workpiece spindle (23) and/or the tool spindles (24, 25, 28) is/are able to carry out a feed motion (30) that is directed transverse to the infeed direction (29).

7. Apparatus according to one of the Claims 5 or 6, **characterized in that** at least the first or the third tool spindle (24, 28) and the workpiece spindle (23) are rotationally drivable by a motor, the workpiece spindle (23) and the at least one rotationally driven tool spindle (24, 28) being maintained in synchronism by an electronic control device.

8. Apparatus according to one of the Claims 5 to 7, **characterized in that** the tool spindles (24, 25, 28) are arranged parallel to one another with their axes extending substantially transverse to the infeed direction (29).

## Revendications

1. Procédé pour tailler des dents dans des pièces à usiner (1), dans lequel une pièce brute sensiblement dépourvue de dents, est pourvue de dents grossières avec un premier outil de coupe (2) présentant des dents de coupe (3) lors d'une étape d'ébauche, durant laquelle sont formées des dents (1') dont la largeur (B'), définie par la distance séparant leur flancs (7, 7', 7"), est plus grande que la cote nominale (B), dans lequel, lors d'une étape d'ébavurage consécutive, la suppression d'une bavure sur le côté frontal s'accompagne de la réalisation d'un chanfrein (11) pourvue d'une roue d'ébavurage combinée avec un outil de repoussage (26) sur le bord frontal des flancs des dents et enfin dans lequel la largeur des dents (1') est amenée à la cote nominale (B) par usinage des flancs des dents (7, 7', 7") lors d'une étape de finition, **caractérisé en ce que** pour l'étape d'ébauche est utilisé un outil d'ébauche ayant des dents d'ébauche (3) présentant une hauteur de dent (4) correspondant sensiblement à la cote nominale de la profondeur (8) des entredents, et **en ce que** pour l'étape de finition est utilisé un outil de finition (12) ayant des dents de finition (13), la hauteur (14) des dents de finition étant inférieure à la hauteur (4) des dents d'ébauche et la largeur (15) des dents de finition étant plus grande que la largeur (5) des dents d'ébauche.

2. Procédé selon la revendication 1, **caractérisé en ce que** l'outil d'ébauche (2) et l'outil de finition (12) sont des outils en forme de roue dentée présentant une pluralité de dents de coupe (3, 13) qui sont entrainés en rotation par une broche porte-outil commune (24) ou des broches porte-outil différentes (24, 28).

3. Procédé selon l'une des revendications précédentes, **caractérisé en ce que** le chanfrein (11) réalisé lors d'étape d'ébavurage, est plus large dans la région de tête (7") des flancs de dents (7) que dans la région de pied (7') des flancs de dents (7).

4. Procédé selon l'une des revendications précédentes, **caractérisé en ce que** la largeur du chanfrein (11) réalisé lors de l'étape d'ébavurage, est réduite dans la région de tête (7") des flancs de dents (7) et dans une région médiane attenante des flancs de dents (7) lors de l'étape de finition.

5. Dispositif pour la mise en oeuvre du procédé selon l'une des revendications précédentes ayant un bâti de machine (20), une première broche porte-outil (24) associée sensiblement à demeure au bâti de machine (20) et pourvue d'un outil d'ébauche (2), une deuxième broche porte-outil (24) associée sensiblement à demeure au bâti de machine (20) et pourvue d'une roue d'ébavurage (27) combinée avec un outil de repoussage (26), un outil de finition (12) qui est reçu soit dans une troisième broche porte-outil (28) associée sensiblement à demeure au bâti de machine (20), soit par la première broche porte-outil (24) et une broche porte-pièce (23) pour recevoir une pièce à usiner qui est déplaçable pour mise à disposition aux deux, respectivement trois broches porte-outil, **caractérisé en ce que** la hauteur (4) des dents d'ébauche (3) de l'outil d'ébauche (2) correspond sensiblement à la cote nominale de la profondeur (8) des entredents d'une denture à réaliser, mais en étant moins large que la cote nominale (B) des entredents à réaliser et dans lequel les dents de repoussage (31) de l'outil de repoussage (26) présentent au moins un flanc de repoussage en biais (32) qui engendre un chanfrein (11) plus large dans la région de tête (7") du flanc de dent (7) que dans la région de pied (7') du flanc de dent (7) et dans lequel les dents de finition (13) de l'outil de finition (12) ont une hauteur de dent (14) inférieure à la hauteur de dent (4) des dents d'ébauche et une largeur de dent (15) plus grande que la largeur (5) des dents d'ébauche (3).

6. Dispositif selon la revendication 5, **caractérisé en ce que** la broche porte-pièce (23) et/ou les broches porte-outil (24, 25, 28) sont en mesure d'effectuer un mouvement d'avance transversal par rapport à la direction de mise à disposition (29).

7. Dispositif selon l'une des revendications 5 ou 6, **caractérisé en ce qu'**au moins la première ou troisième broche porte-outil (24, 28) et la broche porte-pièce (23) sont entrainées en rotation par un moteur, dans lequel la broche porte-pièce (23) et l'au moins une broche porte-outil entrainée en rotation (24, 28) sont maintenues synchrones par un dispositif de commande électronique.

8. Dispositif selon l'une des revendications 5 à 7, **caractérisé en ce que** les broches porte-outil (24, 25, 28) sont agencées parallèles entre elles, leurs axes s'étendant sensiblement transversalement à la direction de mise à disposition (29).
